# EUROPÄISCHE PATENTSCHRIFT

(11) **EP 2 845 933 B1**
(45) Veröffentlichungstag und Bekanntmachung des Hinweises auf die Patenterteilung: **01.03.2017**
(21) Anmeldenummer: 14171861.9
(22) Anmeldetag: 11.06.2014
(51) Int. Cl.: B60C 9/00, B60C 9/20

(54) **PKW-Fahrzeugluftreifen**
Pneumatic tyres for cars
Pneus de véhicule automobile

(30) Priorität: 29.08.2013 DE 102013109360
(43) Veröffentlichungstag der Anmeldung: 11.03.2015
(73) Patentinhaber: Continental Reifen Deutschland GmbH, 30165 Hannover (DE)
(72) Erfinder: Reese, Wolfgang, 31228 Peine (DE)
(74) Vertreter: Finger, Karsten

(56) Entgegenhaltungen:
- DE-A1- 19 534 808
- DE-A1-102008 045 506
- DE-A1-102009 026 215
- US-A- 5 173 137

## Beschreibung

Die Erfindung betrifft einen PKW-Fahrzeugluftreifen in Radialbauart mit einem mehrlagigen Gürtel, welcher wenigstens zwei Gürtellagen aus in Kautschuk eingebetteten Festigkeitsträgern aus Stahl aufweist, wobei eine dieser Gürtellagen Monofilamente mit einem im wesentlichen elliptischen Querschnitt mit einem ersten Durchmesser D und einem zweiten Durchmesser d aufweist, wobei der erste Durchmesser D in einem Bereich zwischen 0,40 mm und 0,60 mm liegt und wobei d < D.

Ein derartiger Fahrzeugluftreifen ist aus der EP 0 738 615 B1 bekannt geworden. Um im Gürtelbereich eines Reifens gewichtsreduzierende Maßnahmen vorzunehmen, welche insbesondere den Rollwiderstand positiv beeinflussen, weisen die beiden Gürtellagen des Gürtels unterschiedliche Summen der Querschnittsflächen der Stahlkorde auf, wobei die radial äußere Gürtellage eine geringere Summe der Querschnittsflächen der Stahlkorde als die radial innere Gürtellage aufweist. Zudem wird offenbart, dass Monofilamente mit elliptischem Querschnitt anstatt der vorgenannten Stahlkorden oder Monofilamente mit kreisrundem Querschnitt eingesetzt werden können, wobei diese im Querschnitt einen ersten Durchmesser D (= Breite) von 0,4 bis 0,6 mm und einen zweiten Durchmesser d (= Höhe) von 0,28 bis 0,34 mm aufweisen. Es ist aufgrund der geringen Höhe der Monofilamente im Vergleich zu Korden oder Monofilamenten mit in etwa kreisrundem Querschnitt ermöglicht, die Gürtellage geringer dick auszuführen, wodurch weiter an Material und an Gewicht des Reifens eingespart und ein Vorteil in Bezug auf den Rollwiderstand des Reifens erreicht ist. Ein Monofilament mit elliptischem Querschnitt ist derart in der Gürtellage angeordnet, dass der erste Durchmesser D parallel zur flächigen Erstreckung der Gürtellage angeordnet ist.

Es ist ebenfalls bekannt Monofilamente der Konstruktion 1x0,30 in Gürtellagen anzuordnen. Diese Monofilamente weisen einen kreisrunden Querschnitt mit einem Durchmesser von 0,30 mm auf.

Aus der DE 10 2009 026 215 A1 und aus der DE 10 2008 045 506 A1 sind Festigkeitsträger aus Stahl bekannt, welche aus zwei oder mehr miteinander verdrehten Filamenten bestehen und wobei die Festigkeitsträger einen ovalen Querschnitt aufweisen können. Aus der US 5 173 137 A sind Monofilamente mit elliptischem Querschnitt aus Polyamid für die Karkasse bekannt. Aus der DE 195 34 808 A1 sind Gürtellagen von Fahrzeugluftreifen mit Monofilamenten aus Polyester mit elliptischem Querschnitt bekannt.

Der Gürtel sorgt für die Steifigkeit der Reifenlauffläche in Umfangs- und Querrichtung und dient der Kraftübertragung, der Seitenführung und ist u.a. für den Abrieb des Reifens relevant.

Es ist die Aufgabe der Erfindung, einen Fahrzeugluftreifen bereitzustellen, der eine Gürtelkonstruktion aufweist, die weiterhin rollwiderstandsoptimiert ist, jedoch in seiner Haltbarkeit unverändert ist.

Die Aufgabe wird gelöst, indem der zweite Durchmesser d (die Höhe des Monofilamentes) ≤ 0,20 mm ist.

Es ist ein sehr flacher monofilamentischer Festigkeitsträger für die Gürtellage geschaffen, durch den es ermöglicht ist, - bei üblicher Gummierungsdicke über Kord - eine sehr flache Gürtellage herzustellen. Hierdurch ist an Gummierungsmaterial und somit an Gewicht eingespart, welches sich vorteilhaft auf den Rollwiderstand des Fahrzeugreifens auswirkt. Entgegen der bisherigen Meinung der Fachwelt hat es sich gezeigt, dass man Monofilamente mit elliptischem Querschnitt sehr flach gestalten kann und dennoch ausreichende Festigkeiten in den Gürtellagen erzielt, soweit die Querschnittsflächen der elliptischen Monofilamente ausreichend groß sind.

"Monofilament" meint einen Festigkeitsträger, der aus einem einzigen Filament besteht, wobei ein Filament ein linienförmiges Element beliebiger Länge ist.

"Fahrzeugluftreifen" meint PKW-, Van-, LT-, Truck-, sowie Motorrad-Fahrzeugluftreifen.

Vorteilhaft ist es, wenn alle Gürtellagen des Gürtels Monofilamente mit elliptischem Querschnitt mit einem zweiten Durchmesser d ≤ 0,20 mm aufweisen.

Zweckmäßig ist es, wenn die Gürtelwinkel aller Gürtellagen gleich groß sind. Der "Gürtelwinkel" beschreibt den Winkel der der in der Gürtellage angeordnete Festigkeitsträger mit der Umfangsrichtung des Reifens einschließt. Dieser Gürtelwinkel kann positiv oder negativ steigend sein. Üblicherweise werden Gürtelwinkel ≤ 40° eingesetzt.

Vorteilhaft ist es, wenn die Monofilamente mit elliptischem Querschnitt in einer Dichte von 80 - 145 epdm, bevorzugt in einer Dichte von 100 - 130 epdm, in der Gürtellage angeordnet sind. In Abhängigkeit vom Durchmesser D ergibt sich dabei eine bevorzugte Packungsdichte für eine hohe Haltbarkeit.

Die Durchschlagfestigkeit bzw. Robustheit des Reifens ist vorteilhaft verbessert, indem die Packungsdichte der Monofilamente in der Gürtellage zwischen 45 und 66 % beträgt. "Packungsdichte" beschreibt einen senkrecht auf die Längserstreckung der Korde angeordneten Streckenanteil einer Gesamtstrecke (z.B. dm) in Prozent, welcher durch theoretisch parallel aneinandergelegte Korde ausgefüllt ist. Beispiel: Kordlage mit 100 epdm, wobei der Durchmesser eines Kordes (D) 0,50 mm beträgt: 100 x 0,50 mm / 100 mm = 50%.

Nachfolgend werden drei bevorzugte Ausführungsbeispiele der Erfindung näher erläutert.

Das erste Ausführungsbeispiel betrifft einen PKW-Luftreifen mit einem zweilagigen Gürtel, wobei die radial innere Gürtellage und die radial äußere Gürtellage gleiche Monofilamente aus Stahl aufweisen. Die Monofilamente weisen die Konstruktion 1x0,20/0,45 und somit einen ersten Durchmesser D (Breite) von 0,45 mm und einen zweiten Durchmesser d (Höhe) von 0,20 mm auf. Die Monofilamente sind in einer Dichte von 80 - 145 epdm, bevorzugt in einer Dichte von 100 - 130 epdm in der Gürtellage angeordnet. Die Packungsdichte beträgt 45 - 59 %. Die Querschnittsfläche des Monofilamentes beträgt 0,071 mm².

Das zweite Ausführungsbeispiel betrifft einen PKW-Luftreifen mit einem zweilagigen Gürtel, wobei die radial innere Gürtellage und die radial äußere Gürtellage gleiche Monofilamente aus Stahl aufweisen. Die Monofilamente weisen die Konstruktion 1x0,175/0,52 und somit einen ersten Durchmesser D (Breite) von 0,52 mm und einen zweiten Durchmesser d (Höhe) von 0,175 mm auf. Die Monofilamente sind in einer Dichte von 80 - 125 epdm, bevorzugt in einer Dichte von 100 - 120 epdm in der Gürtellage angeordnet. Die Packungsdichte beträgt 52 - 62 %. Die Querschnittsfläche des Monofilamentes beträgt 0,071 mm².

Das dritte Ausführungsbeispiel betrifft einen PKW-Luftreifen mit einem zweilagigen Gürtel, wobei die radial innere Gürtellage und die radial äußere Gürtellage gleiche Monofilamente aus Stahl aufweisen. Die Monofilamente weisen die Konstruktion 1x0,15/0,60 und somit einen ersten Durchmesser D (Breite) von 0,60 mm und einen zweiten Durchmesser d (Höhe) von 0,15 mm auf. Die Monofilamente sind in einer Dichte von 80 - 115 epdm, bevorzugt in einer Dichte von 100 - 110 epdm in der Gürtellage angeordnet. Die Packungsdichte beträgt 60 - 66 %. Die Querschnittsfläche des Monofilamentes beträgt 0,071 mm².

## Patentansprüche

1. Fahrzeugluftreifen in Radialbauart mit einem mehrlagigen Gürtel, welcher wenigstens zwei Gürtellagen aus in Kautschuk eingebetteten Festigkeitsträgern aus Stahl aufweist, wobei eine dieser Gürtellagen Monofilamente mit einem im wesentlichen elliptischen Querschnitt mit einem ersten Durchmesser D und einem zweiten Durchmesser d aufweist, wobei der zweite Durchmesser d < der erste Durchmesser D ist und wobei der erste Durchmesser D in einem Bereich zwischen 0,40 mm und 0,60 mm liegt,
**dadurch gekennzeichnet, dass** der zweite Durchmesser d ≤ 0,20 mm ist.

2. Fahrzeugluftreifen nach Anspruch 1,
**dadurch gekennzeichnet, dass** alle Gürtellagen des Gürtels Monofilamente mit elliptischem Querschnitt aufweisen.

3. Fahrzeugluftreifen nach Anspruch 1 oder 2,
**dadurch gekennzeichnet, dass** die Gürtelwinkel aller Gürtellagen gleich sind.

4. Fahrzeugluftreifen nach einem oder mehreren der vorangehenden Ansprüche,
**dadurch gekennzeichnet, dass** die Monofilamente mit elliptischem Querschnitt in einer Dichte von 80 - 145 epdm, bevorzugt in einer Dichte von 100 - 130 epdm, in der Gürtellage angeordnet sind.

5. Fahrzeugluftreifen nach einem oder mehreren der vorangehenden Ansprüche,
**dadurch gekennzeichnet, dass** die Packungsdichte der Monofilamente in der Gürtellage zwischen 45 und 66 %, vorzugsweise zwischen 50 und 66 % beträgt.

## Claims

1. Pneumatic vehicle tyre of a radial type of construction with a multi-ply breaker belt, which has at least two belt plies comprising steel reinforcing elements embedded in rubber, wherein one of these belt plies has monofilaments with a substantially elliptical cross section of a first diameter D and a second diameter d, wherein the second diameter d is < the first diameter D and wherein the first diameter D lies in a range between 0.40 mm and 0.60 mm,
**characterized in that** the second diameter d is ≤ 0.20 mm.

2. Pneumatic vehicle tyre according to Claim 1,
**characterized in that** all of the belt plies of the breaker belt have monofilaments with an elliptical cross section.

3. Pneumatic vehicle tyre according to Claim 1 or 2,
**characterized in that** the belt angles of all the belt plies are equal.

4. Pneumatic vehicle tyre according to one or more of the preceding claims,
**characterized in that** the monofilaments of an elliptical cross section are arranged in the belt ply with a density of 80-145 epdm, preferably with a density of 100-130 epdm.

5. Pneumatic vehicle tyre according to one or more of the preceding claims,
**characterized in that** the packing density of the monofilaments in the belt ply is between 45 and 66%, preferably between 50 and 66%.

## Revendications

1. Pneu de véhicule de construction radiale, comprenant une ceinture multicouche qui présente au moins deux couches de ceinture constituées de renforts en acier noyés dans du caoutchouc, l'une de ces couches de ceinture présentant des monofilaments ayant une section transversale essentiellement elliptique ayant un premier diamètre D et un deuxième diamètre d, le deuxième diamètre d étant inférieur au premier diamètre D et le premier diamètre D étant compris dans une plage de 0,40 mm à 0,60 mm,
**caractérisé en ce que** le deuxième diamètre d ≤ 0,20 mm.

2. Pneu de véhicule selon la revendication 1,
**caractérisé en ce que** toutes les couches de ceinture de la ceinture présentent des monofilaments de section transversale elliptique.

3. Pneu de véhicule selon la revendication 1 ou 2,
**caractérisé en ce que** les angles de ceinture de toutes les couches de ceinture sont identiques.

4. Pneu de véhicule selon l'une quelconque ou plusieurs des revendications précédentes, **caractérisé en ce que** les monofilaments de section transversale elliptique sont disposés avec une densité de 80 - 145 epdm, de préférence avec une densité de 100 - 130 epdm, dans la couche de ceinture.

5. Pneu de véhicule selon l'une quelconque ou plusieurs des revendications précédentes, **caractérisé en ce que** la densité de remplissage des monofilaments dans la couche de ceinture est comprise entre 45 et 66 %, de préférence entre 50 et 66 %.
